# EUROPEAN PATENT APPLICATION

(11) **EP 4 804 282 A1**
(43) Date of publication of application: **09.09.2026**
(21) Application number: 24885925.8
(22) Date of filing: 08.04.2024
(51) Int. Cl.: H01M 10/0585, H01M 10/42, H01M 10/052, H01M 10/0562, H01M 4/64, H01M 10/04, H01M 50/59, H01M 50/586

(54) **ALL-SOLID RECHARGEABLE BATTERY**

(30) Priority: 02.11.2023 KR 20230150318
(71) Applicant: SAMSUNG SDI CO., LTD., Yongin-si, Gyeonggi-do 17084 (KR)
(72) Inventor: LEE, Minsuk, Yongin-si, Gyeonggi-do 17084 (KR); KIM, Jaewon, Yongin-si, Gyeonggi-do 17084 (KR); KIM, Jin-Woo, Yongin-si, Gyeonggi-do 17084 (KR); RYU, Young Gyoon, Yongin-si, Gyeonggi-do 17084 (KR)
(74) Representative: Michalski Hüttermann & Partner mbB
(86) International application number: PCT/KR2024/004665
(87) International publication number: WO 2025/095243

(57) **Abstract**

An all-solid-state rechargeable battery is provided. The all-solid-state rechargeable battery includes a negative electrode; a solid electrolyte layer stacked on the negative electrode; a positive electrode provided with a positive active material layer on a positive electrode current collector and stacked on the solid electrolyte layer; and an insulating gasket positioned on the outside between the positive active material layer and the solid electrolyte layer, wherein the positive active material layer includes a high-density area corresponding to the gasket and compressed by the penetration of the gasket, and a low-density area provided inside the high-density area.

## Description

### [Technical Field]

The present disclosure relates to an all-solid-state rechargeable battery.

### [Background Art]

Recently, in response to industry demands, development of batteries with high energy density and safety is being actively conducted. For example, lithium ion batteries are being commercialized not only in information-related devices and communication devices, but also in the automotive field. In the automotive field, safety is particularly important because it is related to a safety.

Since lithium ion batteries currently on the market use an electrolyte solution including a flammable organic solvent, there is a possibility of overheating and fire if a short circuit occurs. In response to this, an all-solid-state rechargeable battery using a solid electrolyte instead of the electrolyte solution is being proposed.

By not using the flammable organic solvents, all-solid-state rechargeable batteries may greatly reduce the possibility of fire or explosion even if short circuit occurs. Therefore, these all-solid-state rechargeable batteries may greatly increase safety compared to lithium ion batteries which use the electrolyte solution.

The above information disclosed in this Background section is for enhancement of understanding of the background of the present disclosure, and therefore, it may contain information that does not constitute prior art.

### [Disclosure]

### [Technical Problem]

An embodiment is to provide a solid rechargeable battery to suppress an electrical short circuit by forming an NP ratio of a negative electrode and a positive electrode functionally greater than 1.0 (NP ratio>1) while the sizes of the positive electrode and the negative electrode are the same.

### [Technical Solution]

An all-solid-state rechargeable battery according to an embodiment includes a negative electrode; a solid electrolyte layer stacked on the negative electrode; a positive electrode provided with a positive active material layer on a positive electrode current collector and stacked on the solid electrolyte layer; and an insulating gasket positioned on the outside between the positive active material layer and the solid electrolyte layer, wherein the positive active material layer includes a high-density area corresponding to the gasket and compressed by the penetration of the gasket, and a low-density area provided inside the high-density area.

The positive electrode current collector may include a low-intensity area corresponding to the high-density area, and a high-intensity area provided inside the low-intensity area.

The first ends of the positive electrode and the gasket may coincide with each other, and the second end of the solid electrolyte layer may protrude further outward than the first end by a protruded width W.

The positive active material layer and the gasket may form the same plane on the solid electrolyte layer side.

The positive active material layer and the gasket may form a stepped structure.

The amount of the penetration of the gasket may be within 20% of the gasket thickness.

The gasket may penetrate into the solid electrolyte layer.

The gasket may form a stepped structure with the positive active material layer, and a reverse stepped structure with the solid electrolyte layer.

A manufacturing method of an all-solid-state rechargeable battery according to an embodiment includes pressing a positive electrode of which a positive active material layer is formed on a positive electrode current collector with a first roll press; transferring a gasket to the outer surface of the positive active material layer with a second roll press; pressurizing the positive electrode to which the gasket is transferred with a flat plate to be punched; stacking a negative electrode on a solid electrolyte layer; and stacking the solid electrolyte layer on the positive active material layer and the gasket side with a third roll press.

The first roll press may pressurize the positive active material layer with 50% of the total pressure to increase a first adhesion of the positive active material layer and the gasket to be greater than a second adhesion of the gasket and a carrier film.

The second roll press may pressurize the first area corresponding to the gasket with high density among the positive active material layers, and pressurize a second area, which is set inside the first area, with density lower than the first area.

The second roll press may pressurize a first response area corresponding to the first area of the positive electrode current collector with a low intensity, and form the second response area, which is set inside the first response area, with a higher intensity than the first response area.

The fifth roll press may align the first ends of the positive electrode and the gasket with each other, and protrude the second end of the solid electrolyte layer further outward than the first end by a protruded width W.

The fifth roll press may form the positive active material layer and the gasket on the same plane on the solid electrolyte layer side.

The fifth roll press may further protrude the gasket beyond the surface of the positive active material on the solid electrolyte layer side to penetrate into the solid electrolyte layer.

### [Advantageous Effects]

In an embodiment, through the gasket interposed on the edge between the solid electrolyte layer and the positive active material layer, even though the sizes of the positive and negative electrodes are the same, electrical short circuits between the positive and negative electrodes may be suppressed.

### [Description of the Drawings]

FIG. 1 is a cross-sectional view showing an all-solid-state rechargeable battery according to an embodiment.
FIG. 2 is a cross-sectional view showing a formation of a lithium metal layer of an all-solid-state rechargeable battery according to an embodiment.
FIG. 3 is a cross-sectional view showing an all-solid-state rechargeable battery according to a first embodiment of the present invention.
FIG. 4 is a plan view in which an all-solid-state rechargeable battery of FIG. 3 unfolds for each component.
FIG. 5 is an enlarged cross-sectional view showing a portion of FIG. 3.
FIG. 6 is a cross-sectional view showing an all-solid-state rechargeable battery according to a second embodiment of the present invention.
FIG. 7 is a flowchart showing a manufacturing method of an all-solid-state rechargeable battery according to an embodiment.
FIG. 8 is a cross-sectional view of a state in which a gasket is transferred to a positive electrode and a carrier film is not removed.
FIG. 9A is a cross-sectional view of a state in which a gasket is transferred to a positive electrode.
FIG. 9B is a cross-sectional view of a state in which a positive electrode transferred at FIG. 9A is punched out and a carrier film is removed.
FIG. 10 is a cross-sectional view of a state in which a negative electrode is stacked on a solid electrolyte layer.
FIG. 11 is a cross-sectional view of a state in which a gasket-transferred positive electrode is punched out and stacked on a solid electrolyte layer.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

In addition, unless explicitly described to the contrary, the word "comprise," and variations such as "comprises" or "comprising," should be understood to imply the inclusion of stated elements but not the exclusion of any other elements.

In the drawings, the thickness of layers, films, panels, areas, etc., are exaggerated for clarity, and like reference numerals designate like elements throughout the specification. It should be understood that when an element such as a layer, film, area, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface. Here, "or" is not to be construed as an exclusive meaning-for example, "A or B" is construed to include A, B, A+B, and the like.

### Positive electrode for an all-solid-state rechargeable battery

One embodiment provides a positive electrode for an all-solid-state rechargeable battery including a current collector and a positive active material layer disposed on the current collector, wherein the positive active material layer includes a positive active material, a sulfide-based solid electrolyte, a fluorinated resin binder, and a vanadium oxide.

The positive electrode for an all-solid-state rechargeable battery is manufactured by applying a positive electrode composition including a positive active material, a sulfide-based solid electrolyte, a fluorinated resin binder, and a vanadium oxide to a current collector, drying them, and rolling them.

The positive electrode composition generally has a strong basicity due to residual lithium such as LiOH or other components, which may result in gelation or agglomeration of the fluorinated resin binder. However, according to one embodiment, by adding a vanadium oxide, gelation of the fluorinated resin binder may be suppressed and processability may be secured by maintaining the viscosity of the positive electrode composition. In addition, since there is no need to use a neutralizing agent or the like, degradation of the sulfide-based solid electrolytes by the neutralizing agent may be prevented, and performance of the all-solid-state rechargeable battery can be improved accordingly.

### Vanadium oxide

The vanadium oxide may be a component insoluble in the solvent of the positive electrode composition, controlling the strong basicity of the positive electrode composition to prevent gelation of the fluorinated resin binder, while simultaneously suppressing the degradation of the sulfide-based solid electrolyte, and thereby improving the ion conductivity of the positive electrode. It should be understood that the vanadium oxide controls pH through physical and/or chemical reactions with -OH groups in the positive electrode composition in the strong base state and thus suppresses gelation of the fluorinated resin binder. Compared to other transition metal oxides such as titanium oxide or tungsten oxide, the vanadium oxide may have a more excellent ability to control basicity and suppress gelation of the fluorinated resin binder and may have low reactivity to the sulfide-based solid electrolytes, and the ion conductivity of the solid-state rechargeable batteries may be improved and the overall performance may be improved by suppressing the degradation of the sulfide-based solid electrolytes.

The vanadium oxide may include, for example, V₂O₃, VO₂, V₂O₄, V₂O₅, or combinations thereof. The vanadium oxide may be included in an amount of 0.01 wt% to 5 wt% based on 100 wt% of the positive active material layer-for example, 0.05 wt% to 5 wt%, 0.1 wt% to 5 wt%, 0.5 wt% to 5 wt%, or 0.5 wt% to 3 wt%. When the vanadium oxide is included in this amount, the viscosity of the positive electrode composition may be appropriately maintained without deterioration of capacity, thereby improving processability and improving the ion conductivity of the positive electrode.

According to one embodiment, the positive electrode composition is coated on the current collector in a state in which the vanadium oxide is dispersed by adding the vanadium oxide to the positive electrode composition, so the vanadium oxide may be dispersed in the manufactured positive active material layer. This is different from the form in which vanadium oxide is coated on the surface of the positive active material or the sulfide-based solid electrolyte.

In one example, the vanadium oxide may be a pentavalent vanadium (V) oxide, in which case a melting point of the vanadium oxide may be equal to or less than 1000°C-for example, 600°C to 800°C, or 650°C to 690°C. The pentavalent vanadium oxide may be excellent at suppressing the gelation of the fluorinated resin binder in the positive electrode and may be advantageous for improving overall performance of the battery.

The vanadium oxide may be in a particle form and its average particle diameter D50 may be 10 nm to 10 µm-for example, 10 nm to 5 µm, 10 nm to 3 µm, 50 nm to 1 µm, 50 nm to 500 nm, or 500 nm to 1 µm. The vanadium oxide with these physical properties may be suitable for being input to the positive electrode composition, and may effectively suppress gelation of the positive electrode composition without adversely affecting the positive electrode. If a particle diameter of the vanadium oxide is too small, it may not be dispersed properly in the positive electrode, blocking the passage of electrons and ions, which may degrade battery performance, or may not sufficiently suppress gelation of the binder. If the particle diameter of the vanadium oxide is too large, it may block the passage of electrons and ions, thereby degrading the performance of the battery.

### Fluorinated resin binder

The fluorinated resin binder may be a general resin binder including fluorine. For example, it may include polyvinylidene fluoride, polyvinylidene fluoride-hexafluoropropylene copolymer, polyvinylidene fluoride-trichloroethylene copolymer, polyvinylidene fluoride-chlorotrifluoroethylene copolymer, polytetrafluoroethylene, or combinations thereof.

A weight average molecular weight of the fluorinated resin binder may be about 50 kDa to 5,000 kDa, or 100 kDa to 2000 kDa. A glass transition temperature of the fluorinated resin binder may be equal to or less than -10°C, and a melting point may be equal to or greater than 100°C. A melting viscosity of the fluorinated resin binder may be about 10 kP to 50 kP. In addition, the fluorinated resin binder may be in the form of particles, and an average particle diameter may be 50 nm to 200 µm. The fluorinated resin binder with these physical properties may have excellent adhesion if a small amount thereof is put into the positive electrode composition, and it may increase durability of the battery without adversely affecting battery performance.

The fluorinated resin binder may be included in an amount of 0.1 wt% to 10 wt% based on 100 wt% of the positive active material layer-for example, in the amount of 0.1 wt% to 8 wt%, 0.1 wt% to 6 wt%, 0.1 wt% to 5 wt%, 0.5 wt% to 4 wt%, or 1 wt% to 3 wt%. If the fluorinated resin binder is included within the content range, it may have excellent adhesion without adversely affecting the positive electrode.

### Positive active material

The positive active material may be applicable without limits if it is generally used in the all-solid-state rechargeable battery. For example, the positive active material may be a compound allowing reversible intercalation and deintercalation of lithium, and may include a compound expressed as one of following formulae.

LiₐA_{1-b}X_{b}D₂ (0.90 ≤ a ≤ 1.8, 0 ≤ b ≤ 0.5);

LiₐA₁-_{b}X_{b}O₂-_{c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤ 1.8, 0 ≤ b ≤ 0.5, 0 ≤ c ≤ 0.5, 0 < a ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5,0.001 ≤ e ≤ 0.1);

LiₐNiG_{b}O₂ (0.90 ≤ a ≤ 1.8, 0.001 ≤ b ≤ 0.1);

LiₐCoG_{b}O₂(0.90 ≤ a ≤ 1.8, 0.001 ≤ b ≤ 0.1);

LiₐMn_{1-b}G_{b}O₂(0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2);

LiₐFePO₄ (0.90 ≤ a ≤ 1.8).

Regarding the formulae, A may be selected from among Ni, Co, Mn, and combinations thereof; X may be selected from Al, Ni, Co, Mn, Cr, Fe, Mg, Sr, V, rare earth elements, and combinations thereof; D may be selected from among O, F, S, P, and combinations thereof; E may be selected from among Co, Mn, and combinations thereof; T may be selected from among F, S, P, and combinations thereof; G may be selected from among Al, Cr, Mn, Fe, Mg, La, Ce, Sr, V, and combinations thereof; Q may be selected from among Ti, Mo, Mn, and combinations thereof; Z may be selected from among Cr, V, Fe, Sc, Y, and combinations thereof; and J may be selected from among V, Cr, Mn, Co, Ni, Cu, and combinations thereof.

The positive active material may be, for example, a lithium cobalt oxide (LCO), a lithium nickel oxide (LNO), a lithium nickel cobalt oxide (NC), a lithium nickel cobalt aluminum oxide (NCA), a lithium nickel cobalt manganese oxide (NCM), a lithium nickel manganese oxide (NM), a lithium manganese oxide (LMO), or a lithium iron phosphate oxide (LFP).

The positive active material may include a lithium nickel-based oxide expressed in Formula 1, a lithium cobalt-based oxide expressed in Formula 2, a lithium iron phosphate-based compound expressed in Formula 3, or combinations thereof.

[Chemical Formula 1] Liₐ₁Niₓ₁M¹_{y1}M²_{1-x1-y1}O₂

In Formula 1, it is given that 0.9≤a1≤1.8, 0.3≤x1≤1, 0≤y1≤0.7, and M¹ and M² are at least one element independently selected from among Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Formula 2, it is given that 0.9≤a2≤1.8, 0.6≤x2≤1, and M³ is at least one element selected from among Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴ ₁₋ₓ₃PO₄

In Formula 3, it is given that 0.9≤a3≤1.8, 0.6≤x3≤1, and M⁴ is at least one element selected from among Al, B, Ba, Ca, Ce, Co, Cr, Cu, F, Fe, Mg, Mn, Mo, Nb, P, S, Si, Sr, Ti, V, W, and Zr.

The average particle diameter D50 of the positive active material may be 1 µm to 25 µm-for example, 3 µm to 25 µm, 5 µm to 25 µm, 5 µm to 20 µm, 8 µm to 20 µm, or 10 µm to 18 µm. The positive active material having such a particle diameter range may be mixed with other components in the positive active material layer and may realize high capacity and high energy density.

The positive active material may have a secondary particle form made by agglomerating primary particles or may have a single particle form. The positive active material may have a spherical shape or another shape that is similar to the spherical shape, or may be a polyhedron or an amorphous shape.

### Sulfide-based solid electrolyte

The sulfide-based solid electrolyte may include, for example, Li₂S-P₂S₅, Li₂S-P₂S₅-LiX (X is a halogen element, for example, I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are integers, and Z is Ge, Zn, or Ga), Li₂S-GeS₂, Li₂S-SiS₂-Li₃PO₄, Li₂S-SiS₂-LiₚMO_{q} (p and q are integers, and M is P, Si, Ge, B, Al, Ga, or In), or combinations thereof.

The sulfide-based solid electrolyte may be obtained by, for example, mixing Li₂S and P₂S₅ with a mole ratio of 50:50 to 90:10 or the mole ratio of 50:50 to 80:20 and selectively performing heat treatment. Within the mixed ratio range, the sulfide-based solid electrolyte with excellent ion conductivity may be prepared. The ion conductivity may be further increased by including other components such as SiS₂, GeS₂, or B₂S₃.

A mechanical milling or a solution method may be applied as a method for mixing sulfur-including materials and producing a sulfide-based solid electrolyte. Mechanical milling is a method for inserting starting materials and a ball mill into a reactor and strongly agitating them to particulate the starting materials and mix them. When using the solution method, the solid electrolyte may be obtained as a precipitate by mixing the starting materials in a solvent. If heat treatment is performed after mixing, the solid electrolyte crystals may become more solid and the ion conductivity may be improved. For example, the sulfide-based solid electrolyte may be prepared by mixing sulfur-including materials and heat treating them at least twice, and in this way, the sulfide-based solid electrolyte with high ion conductivity and robustness may be prepared.

For example, the sulfide-based solid electrolyte particle may include an argyrodite-type sulfide. The argyrodite-type sulfide may be expressed by, for example, the formula of LiₐM_{b}P_{c}S_{d}Aₑ (a, b, c, d, and e are equal to or greater than 0 and equal to or less than 12, M is Ge, Sn, Si, or combinations thereof, and A is F, Cl, Br, or I), and may be expressed by the formula of Li₇₋ₓPS₆₋ₓAₓ (x is equal to or greater than 0.2 and equal to or less than 1.8, and A is F, Cl, Br, or I) as a specific example. The argyrodite-type sulfide may be Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, etc.

The sulfide-based solid electrolyte particles including the argyrodite-type sulfide may have high ion conductivity that is close to the range of 10⁻⁴ to 10⁻² S/cm, which is the ion conductivity of the general liquid electrolytes at room temperature, and may form an intimate bond between the positive active material and the solid electrolyte without causing a decrease in the ion conductivity, and may furthermore form an intimate interface between an electrode layer and a solid electrolyte layer. The all-solid-state battery including the same may have improved battery performance such as rate capability, Coulombic efficiency, and cycle-life characteristics.

The argyrodite-type sulfide-based solid electrolyte may be prepared, for example, by mixing lithium sulfide and phosphorus sulfide, and optionally lithium halide. Heat treatment may be performed after mixing them. The heat treatment may include, for example, at least two heat treatments.

The average particle diameter D50 of the sulfide-based solid electrolyte particle according to an embodiment may be equal to or less than 5.0 µm-for example, 0.1 µm to 5.0 µm, 0.1 µm to 4.0 µm, 0.1 µm to 3.0 µm, 0.5 µm to 2.0 µm, or 0.1 µm to 1.5 µm. The sulfide-based solid electrolyte particles may be small particles with the average particle diameter D50 of 0.1 µm to 1.0 µm or large particles with the average particle diameter D50 of 1.5 µm to 5.0 µm depending on the positions or purposes for which they are used. The sulfide-based solid electrolyte particles having this particle size range may effectively penetrate among the solid particles in the battery, and may have excellent contact with the electrode active material and connectivity among the solid electrolyte particles. The average particle diameter of the sulfide-based solid electrolyte particles may be measured using a microscope image, and for example, a particle size distribution may be obtained by measuring the size of about twenty particles in a scanning electron microscope image, and the diameter D50 may be calculated therefrom.

A content of the solid electrolyte in the positive electrode for a all-solid-state battery may be 0.5 wt% to 35 wt%-for example, 1 wt% to 35 wt%, 5 wt% to 30 wt%, 8 wt% to 25 wt%, or 10 wt% to 20 wt%. This may be the content for the entire weight of the components in the positive electrode, and in detail, may be the content for the entire weight of the positive active material layer.

In an embodiment, the positive active material layer may include 50 wt% to 99.35 wt% of the positive active material, 0.5 wt% to 35 wt% of the sulfide-based solid electrolyte, 0.1 wt% to 10 wt% of the fluorinated resin binder, and 0.05 wt% to 5 wt% of the vanadium oxide based on 100 wt% of the positive active material layer. When the above-noted content range is satisfied, the positive electrode for an all-solid-state rechargeable battery may realize high capacity and high ion conductivity, may maintain high adhesion, and may maintain the viscosity of the positive electrode composition at an appropriate level, thereby improving processability.

### Conductive material

The positive active material layer may further include a conductive material. The conductive material may provide conductivity to the electrode-for example, it may include carbon-based materials such as natural graphite, artificial graphite, carbon black, acetylene black, Ketjen black, carbon fibers, carbon nanotubes, etc.; metal-based materials including copper, nickel, aluminum, and silver and having a metal powder form or a metal fiber form; conductive polymers such as polyphenylene derivatives; or combinations thereof.

The conductive material may be included in an amount of 0.1 wt% to 5 wt%, or 0.1 wt% to 3 wt% based on the entire weight of the respective components of the positive electrode for an all-solid-state battery or the entire weight of the positive active material layer. Within the content range, the conductive material may not degrade the battery performance but may improve the electrical conductivity.

When the positive active material layer further includes a conductive material, the positive active material layer may include 45 wt% to 99.25 wt% of the positive active material, 0.5 wt% to 35 wt% of the sulfide-based solid electrolyte, 0.1 wt% to 10 wt% of the fluorinated resin binder, 0.05 wt% to 5 wt% of the vanadium oxide, and 0.1 wt% to 5 wt% of the conductive material based on 100 wt% of the positive active material layer.

The positive electrode for a lithium rechargeable battery may further include an oxide-based inorganic solid electrolyte in addition to the above-described solid electrolyte. The oxide-based inorganic solid electrolyte may include, for example, Li₁₊ₓTi₂₋ₓAl PO₄₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), PB (Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y} PO₄₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, garnet-based ceramics Li₃₊ₓLa₃M₂O₁₂ (M=Te, Nb, or Zr; and x is an integer of 1 to 10), or combinations thereof.

### All-solid-state rechargeable battery

The embodiment may provide the all-solid-state rechargeable battery including the above-described positive electrode and the negative electrode and the solid electrolyte layer disposed between the positive electrode and the negative electrode. The all-solid-state rechargeable battery may be referred to as an all-solid-state battery, or a solid lithium rechargeable battery.

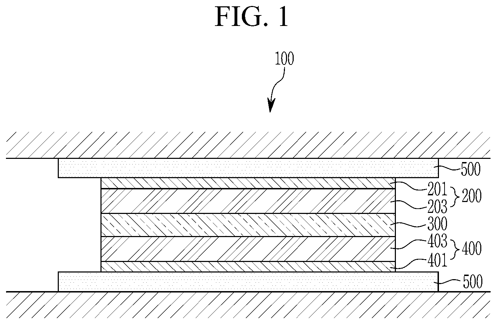

FIG. 1 shows a cross-sectional view of an all-solid-state rechargeable battery according to an embodiment. Referring to FIG. 1, the all-solid-state rechargeable battery 100 may have a structure in which an electrode assembly in which a negative electrode 400 including a negative electrode current collector 401 and a negative active material layer 403, a solid electrolyte layer 300, and a positive electrode 200 including a positive active material layer 203 and a positive electrode current collector 201 are stacked may be accommodated in a case such as a pouch.

The all-solid-state rechargeable battery 100 may further include an elastic layer 500 on at least one external side of the positive electrode 200 and the negative electrode 400. FIG. 1 shows one electrode assembly including the negative electrode 400, the solid electrolyte layer 300, and the positive electrode 200, and the all-solid-state battery may be manufactured by stacking at least two electrode assemblies.

### Negative electrode

The negative electrode for an all-all-solid-state battery may, for example, include a current collector and a negative active material layer disposed on the current collector. The negative active material layer may include a negative active material, and may further include a binder, a conductive material, and/or a solid electrolyte.

The negative active material may include a material for reversibly intercalating/deintercalating lithium ions, a lithium metal, alloys of the lithium metal, a material doped to the lithium and de-doped from the same, or a transition metal oxide.

The material for reversibly intercalating/deintercalating lithium ions may include, for example, crystalline carbon, amorphous carbon, or a combination thereof as a carbon-based negative active material. The crystalline carbon may be non-shaped, or sheet-, flake-, spherical-, or fiber-shaped natural graphite or artificial graphite, and the amorphous carbon may be a soft carbon, a hard carbon, a mesophase pitch carbonized product, calcined coke, and the like.

The alloy of the lithium metal may use an alloy of lithium and at least one metal of Na, K, Rb, Cs, Fr, Be, Mg, Ca, Sr, Si, Sb, Pb, In, Zn, Ba, Ra, Ge, Al, and Sn.

The material capable of doping/de-doping lithium may be an Si-based negative electrode active material or an Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn), and at least one of these materials may be mixed with SiO₂. The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or combinations thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. The content of silicon may be 10 wt% to 50 wt% based on a total weight of the silicon-carbon composite. The content of the crystalline carbon may be 10 wt% to 70 wt% based on the total weight of the silicon-carbon composite, and the content of the amorphous carbon may be 20 wt% to 40 wt% based on the total weight of the silicon-carbon composite. A thickness of the amorphous carbon coating layer may be 5nm to 100nm.

The average particle diameter D50 of the silicon particle may be 10nm to 20µm-for example, 10nm to 500nm. The silicon particles may exist in an oxidized form, and an atomic content ratio of Si:O in the silicon particles indicating a degree of oxidation may be 99:1 to 33:66. The silicon particle may be particles of SiOₓ, and the range of x in SiOₓ in this case may be greater than 0 and less than 2. The average particle diameter D50 may be measured using a particle size analyzer using a laser diffraction method and may represent a diameter of particles whose cumulative volume is 50 volume% in a particle size distribution

The Si-based negative active material or the Sn-based negative active material may be mixed with the carbon-based negative active material. A mixing ratio of the carbon-based negative active material with one of the Si-based negative active material and the Sn-based negative active material may be 1:99 to 90:10 as the weight ratio.

The negative active material may be included in an amount of 95 wt% to 99 wt% based on the total weight of the negative active material layer on the negative active material layer.

In embodiments, the negative active material layer may further include a binder, and may optionally further include a conductive material. The content of the binder on the negative active material layer may be 1 wt% to 5 wt% based on the entire weight of the negative active material layer. When further including a conductive material, the negative active material layer may include 90 wt% to 98 wt% of the negative active material, 1 wt% to 5 wt% of the binder, and 1 wt% to 5 wt% of the conductive material.

The binder may serve to adhere the negative active material particles to each other and may also adhere the negative active material to the current collector. The binder may include a non-water-soluble binder, a water-soluble binder, or a combination thereof.

Examples of the water-insoluble binder may include polyvinyl chloride, carboxylated polyvinyl chloride, polyvinyl fluoride, an ethylene oxide-including polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or combinations thereof.

The water-soluble binder may include a rubber binder or a polymer resin binder. The rubber binder may be selected from among a styrene-butadiene rubber, an acrylated styrene-butadiene rubber, an acrylonitrile-butadiene rubber, an acrylic rubber, a butyl rubber, a fluororubber, and combinations thereof. The polymer resin binder may be selected from among a polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and combinations thereof.

When using the water-soluble binder as the negative electrode binder, a thickener for providing viscosity may be used in combination, and the thickener may, for example, include a cellulose-based compound. The cellulose-based compound may include at least one of carboxymethyl cellulose, hydroxypropylmethyl cellulose, methyl cellulose, alkali metal salts thereof, or combinations thereof. Na, K, or Li may be used as the alkali metal. The used amount of the thickener may be 0.1 parts by weight to 3 parts by weight based on 100 parts by weight of the negative active material.

The conductive material may be used to provide conductivity to the electrode, and may for example, include carbon-based materials such as natural graphite, artificial graphite, carbon black, acetylene black, Ketjen black, carbon fibers, or carbon nanotubes; metal materials including copper, nickel, aluminum, and silver and having a metal powder shape or a metal fiber shape; conductive polymers such as a polyphenylene derivative; or mixtures thereof.

The negative current collector may include one selected from a copper foil, a nickel foil, a stainless steel foil, a titanium foil, a nickel foam, a copper foam, a polymer substrate coated with a conductive metal, and combinations thereof.

For another example, the negative electrode for an all-solid-state battery may be a precipitation-type negative electrode. The precipitation-type negative electrode may be a negative electrode which has no negative active material during the assembly of a battery but in which a lithium metal and the like are precipitated during the charge of the battery and serve as a negative active material.

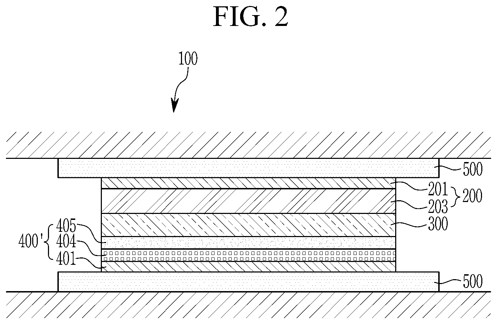

FIG. 2 shows a cross-sectional view on a all-solid-state rechargeable battery including a precipitation-type negative electrode according to an embodiment. Referring to FIG. 2, the precipitation-type negative electrode 400' may include a current collector 401 and a negative electrode coating layer 405 disposed on the current collector 401. The all-solid-state battery having the precipitation-type negative electrode 400' may start to be initially charged in absence of a negative active material, and a lithium metal with high-density and the like may be precipitated between the current collector 401 and the negative electrode coating layer 405 during the charge and may form a lithium metal layer 404 which may work as the negative active material. Accordingly, the precipitation-type negative electrode 400' in the all-solid-state battery which is charged at least once may include the negative electrode current collector 401, the lithium metal layer 404 disposed on the current collector, and the negative electrode coating layer 405 disposed on the metal layer 404. The lithium metal layer 404 may represent a layer in which the lithium metal and the like are precipitated during the charge of the battery, and may be referred to as a metal layer or a negative active material layer.

The negative electrode coating layer 405 may include a metal, a carbon material, or a combination thereof functioning as a catalyst.

The metal may include, for example gold, platinum, palladium, silicon silver, aluminum, bismuth, tin, zinc, or a combination thereof and may be composed of one selected therefrom or an alloy of more than one. When the metal is present in a particle form, an average particle diameter D50 thereof may be less than or equal to about 4 µm-example, 10 nm to 4 µm.

The carbon material may be, for example, crystalline carbon, amorphous carbon, or combinations thereof. The crystalline carbon may be, for example, natural graphite, artificial graphite, mesophase carbon microbeads, or combinations thereof. The amorphous carbon may be for example carbon black, activated carbon, acetylene black, denka black, Ketjen black, or combinations thereof.

When the negative electrode coating layer 405 includes the metal and the carbon material, the metal and the carbon material may be, for example, mixed in the weight ratio of 1:10 to 2:1. The precipitation of the lithium metal may be effectively performed, and characteristics of the all-solid-state battery may be improved. The negative electrode coating layer 405 may include, for example, a carbon material on which a catalyst metal is supported or may include a mixture of metal particles and carbon material particles.

The negative electrode coating layer 405 may include, for example, metal and amorphous carbon, and precipitation of lithium metal may be effectively performed.

The negative electrode coating layer 405 may further include a binder, and the binder may be a conductive binder. The negative electrode coating layer 405 may further include general additives such as a filler, a dispersant, and an ion conductive material.

The thickness of the negative electrode coating layer 405 may, for example, be 100 nm to 20 µm, 500 nm to 10 µm, or 1 µm to 5 µm.

The precipitation-type negative electrode 400' may further include, for example, a thin film on a surface of the current collector-that is, between the current collector and the negative electrode coating layer. The thin film may include an element for forming an alloy with lithium. The element for forming an alloy with lithium may be, for example, gold, silver, zinc, tin, indium, silicon, aluminum, bismuth, and the like, and may be configured with one of them or may be configured with many types of alloys. The thin film may further planarize the precipitation shape of the lithium metal layer 404 and may further improve the characteristics of the all-solid-state battery. The thin film may be formed by, for example, a vacuum deposition method, a sputtering method, a plating method, etc. The thickness of the thin film may, for example, be 1 nm to 500 nm.

### Solid electrolyte layer

The solid electrolyte layer 300 may include a sulfide-based solid electrolyte and an oxide-based solid electrolyte. Details of the sulfide-based solid electrolyte and the oxide-based solid electrolyte have already been described.

In one example, the solid electrolyte included in the positive electrode 200 and the solid electrolyte included in the solid electrolyte layer 300 may include the same compound or different compounds. For example, when the positive electrode 200 and the solid electrolyte layer 300 include an argyrodite-type sulfide-based solid electrolyte, overall performance of the all-solid-state rechargeable battery may be improved. For example, when the positive electrode 200 and the solid electrolyte layer 300 include the aforementioned coated solid electrolyte, the all-solid-state rechargeable battery may implement excellent initial efficiency and lifespan characteristics while implementing high capacity and high energy density.

The average particle diameter D50 of the solid electrolyte included in the positive electrode 200 may be less than the average particle diameter D50 of the solid electrolyte included in the solid electrolyte layer 300. In this case, overall performance may be improved by increasing the mobility of lithium ions while maximizing the energy density of the all-solid-state battery. For example, the average particle diameter D50 of the solid electrolyte included in the positive electrode 200 may be 0.1 µm to 1.0 µm or 0.1 µm to 0.8 µm, and the average particle diameter D50 of the solid electrolyte included in the solid electrolyte layer 300 may be 1.5 µm to 5.0 µm, 2.0 µm to 4.0 µm, or 2.5 µm to 3.5 µm. If the particle size ranges are satisfied, the energy density of the all-solid-state rechargeable battery may be maximized while the transfer of lithium ions is facilitated, so that resistance is suppressed, and thus the overall performance of the all-solid-state rechargeable battery may be improved. The average particle diameter D50 of the solid electrolyte may be measured through a particle size analyzer using a laser diffraction method. Alternatively, about twenty particles may be arbitrarily selected from a micrograph of a scanning electron microscope or the like, the particle size may be measured, the particle size distribution may be obtained, and the D50 value may be calculated.

The solid electrolyte layer may further include a binder in addition to the solid electrolyte. The binder may include a styrene butadiene rubber, polytetrafluoroethylene, polyvinylidene fluoride, polyethylene, an acrylate-based polymer, or combinations thereof, but is not limited thereto. The acrylate-based polymer may be, for example, butyl acrylate, polyacrylate, polymethacrylate, or a combination thereof.

The solid electrolyte layer may be formed by adding a solid electrolyte to a binder solution, coating it on a base film, and drying it. The solvent of the binder solution may be isobutyl isobutyrate, xylene, toluene, benzene, hexane, or a combination thereof. The process for forming a solid electrolyte layer is well known in the art, so a detailed description thereof will be omitted.

The thickness of the solid electrolyte layer may be, for example, 10 µm to 150 µm.

The solid electrolyte layer may further include an alkali metal salt and/or an ionic liquid and/or a conductive polymer.

The alkali metal salt may be, for example, lithium salt. The content of the lithium salt in the solid electrolyte layer may be greater than or equal to 1 M-for example, 1M to 4M. The lithium salt may improve ion conductivity by enhancing the mobility of lithium ions in the solid electrolyte layer.

The lithium salt may include, for example: LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LiODFB), lithium difluoro(oxalato)borate (LiDFOB), lithium bis(trifluoro methanesulfonyl)imide, LiTFSI, LiN(SO₂CF₃)₂, lithium bis(fluorosulfonyl)imide, LiFSI, LiN(SO₂F)₂, LiCF₃SO₃, LiAsF₆, LiSbF₆, LiClO₄, or mixtures thereof.

The lithium salt may be an imide-based salt, and for example, the imide-based lithium salt may include lithium bis(trifluoro methanesulfonyl)imide (LiTFSI), LiN(SO₂CF₃)₂, lithium bis(fluorosulfonyl)imide, LiFSI, and LiN (SO₂F)₂. The lithium salt may maintain or improve ion conductivity by appropriately maintaining chemical reactivity with the ionic liquid.

The ionic liquid has a melting point below the room temperature, so it is a salt or a room-temperature molten salt in a liquid state at the room temperature and composed of ions.

The ionic liquid may be a compound including at least one cation selected from among a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and at least one anion selected from among b) BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, at least one of N-methyl-N-propylpyrrolidinium bis(trifluoromethanesulfonyl)imide N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis (trifluoromethylsulfonyl)amide.

The weight ratio of the solid electrolyte and the ionic liquid in the solid electrolyte layer may be 0.1:99.9 to 90:10-for example, 10:90 to 90:10, 20:80 to 90:10, 30:70 to 90:10, 40:60 to 90:10, or 50:50 to 90:10. The solid electrolyte layer satisfying the above ranges may maintain or improve ion conductivity by improving the electrochemical contact area with the electrode. Accordingly, the energy density, discharge capacity, rate capability, etc. of the solid-state battery may be improved.

The all-solid-state battery may be a unit battery with a structure of positive electrode/solid electrolyte layer/negative electrode, a bi-cell with a structure of positive electrode/solid electrolyte layer/negative electrode/solid electrolyte layer/positive electrode, or a battery repeatedly stacking the unit batteries.

The shape of the all-solid-state battery is not particularly limited, and may be, for example, a coin type, a button type, a sheet type, a stack type, a cylindrical shape, a flat type, and the like. The all-solid-state battery may be applied to a large-sized battery used in an electric vehicle or the like. For example, the all-solid-state battery may also be used in a hybrid vehicle such as a plug-in hybrid electric vehicle (PHEV). It may be used in a field requiring a large amount of power storage-for example, electric bicycles or power tools.

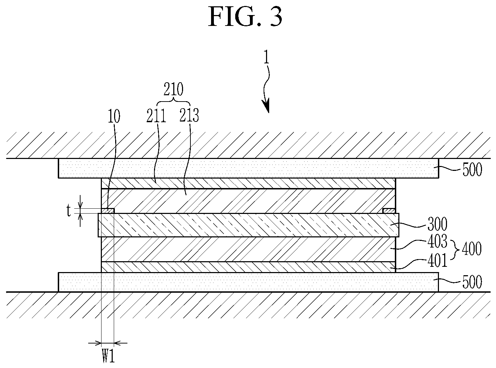

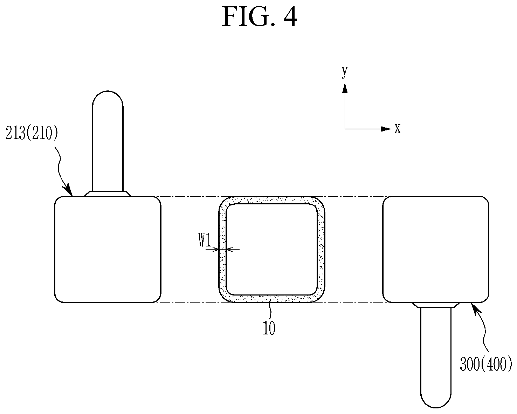

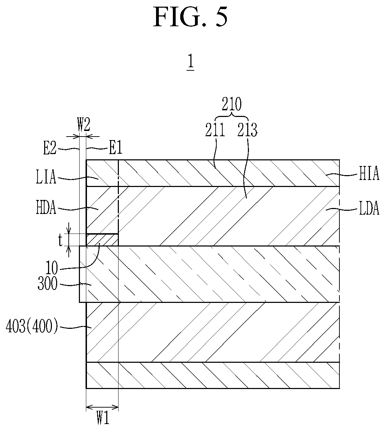

FIG. 3 is a cross-sectional view showing an all-solid-state rechargeable battery according to a first embodiment of the present invention. FIG. 4 is a top plan view showing an all-solid-state rechargeable battery in FIG. 3 unfolded for each component. FIG. 5 is an enlarged cross-sectional view showing a portion of FIG. 3.

Referring to FIG. 3 to FIG. 5, the all-solid-state rechargeable battery 1 according to the first embodiment includes a negative electrode 400, a solid electrolyte layer 300, a positive electrode 210, an elasticity layer 500, and an insulating gasket 10. The all-solid-state rechargeable battery 1 of the first embodiment is called a mono-cell consisting of a single-sided electrode plate. Although not shown separately, the insulating gasket 10 may be applied with the same structure in a bi-cell.

The positive electrode 210 having a cross-section is provided with a positive active material layer 213 produced by a slurry coating a positive active material on one surface of a positive electrode current collector 211 or bonding a solvent-free active material. The negative electrode 400 is provided with a negative active material layer 403 on a negative electrode current collector 401. The solid electrolyte layer 300 may be formed as a film by directly coating a solid electrolyte film on the negative active material layer 403.

An elasticity layer 500 is provided on at least one side of the positive electrode 210 and the negative electrode 400, and in the present embodiment, it is provided on both sides. The elasticity layer 500 provides flatness between the negative electrode 400 and the solid electrolyte layer 300 and flatness between the solid electrolyte layer 300 and the positive electrode 200 through a buffering force and an elastic force in response to an Li precipitation and dissociation of the negative electrode 400 during charging and discharging.

The gasket 10 is positioned on the edge between the positive active material layer 213 and the solid electrolyte layer 300, enabling a uniform pressurization of the solid electrolyte layer 300 to the positive electrode 210 and the negative electrode 400. If the negative electrode 400 is an Li ion precipitation type, Li ions passing through the solid electrolyte layer 300 from the positive electrode 210 are precipitated on the negative electrode 400 when charging, and are dissociated and moved to the positive electrode 210 when discharging.

When charging, the Li ions are precipitated at the negative electrode 400, and the cell volume expands. Also, if pressure is not applied to the cell, the lithium precipitation is non-uniform in a free state, the charging and discharging proceed, non-uniformity of the lithium precipitation is amplified, and the solid electrolyte layer 300 is partially broken, which may cause a short circuit

The gasket 10 is configured to enable the uniform pressurization of the solid electrolyte layer 300 while preventing the movement of lithium ions outside the positive active material layer 213. For this, the gasket 10 has an ionic conductivity of zero.

The solid electrolyte layer 300 may be a freestanding layer, and in this case, it contains a non-woven fabric. In other words, the gasket 10 may be formed by coating a binder on polypropylene (PP) or polypropylene non-woven fabric.

The gasket 10 is interposed on the outside between the solid electrolyte layer 300 and the positive electrode 210, and allows the pressurization uniformity of the solid electrolyte layer 300 to be increased through changes in the thickness, density, and intensity of the positive electrode 210 in the pressurization process. The gasket 10 may be formed of oxide and has a predetermined thickness t and a width W1.

The change in thickness of the positive electrode 210 due to the pressurization process appears on the positive active material layer 213. By the pressurization process, the positive active material layer 213 includes a high-density area (HDA) and a low-density area (LDA) by the gasket 10. For example, the high-density area HAD may be expressed by a density 3.4-3.6 g/cm³, and the low-density area LDA may be expressed by a density 3.2-3.4 g/cm³.

The high-density area HDA is compressed with an intrusion corresponding to the width W1 of the gasket 10 and corresponding to the thickness t of the gasket 10. The low-density area LDA does not correspond to the width W1 of the gasket 10 and is provided inside the high-density area HDA. That is, the high-density area HDA and the low-density area LDA are set to correspond to a boundary line by the width W1 of the gasket 10.

Additionally, the change in the thickness of the positive electrode 210 due to the pressurization process appears as the change in the intensity of the positive electrode current collector 211. By the pressurization process, the positive electrode current collector 211 includes a low-intensity area LIA and a high-intensity area HIA by the gasket 10. As an example, the low-intensity area LIA may be displayed as 800-1500 nm, and the high-intensity area HIA may be displayed as 150-800 nm.

The low-intensity area LIA forms a smooth surface corresponding to the width W1 of the gasket 10-that is, the high-density area HDA. The high-intensity area HIA forms a rough surface corresponding to the outside of the width W1 of the gasket 10-that is, the low-density area LDA, and is provided inside the low-density area LIA.

The first end E1 of the positive electrode 210 and the gasket 10 coincide with each other, and the second end E2 of the solid electrolyte layer 300 protrudes outwardly by a protrusion width W2 more than the first end E1. At this time, the positive electrode 210 and the negative electrode 400 have the same size.

The solid electrolyte layer 300 has the same size as the negative electrode 400 before the pressurization process, and becomes larger than the negative electrode 400 by stretching after the pressurization process. In other words, the solid electrolyte layer 300 becomes larger on one side than the negative electrode 400 by the protruded width W2, so when considering both sides of the entire width, it becomes twice (W2*2) as large.

The gasket 10 is formed of an oxide layer of a thin film, and may have the width W1 and the thickness t of the gasket 10. As an example, the width W1 is greater than 0 and less than 5 mm (0<W1<5 mm). The thickness t is greater than 0 and less than 10(m) (0<t<10µm).

If the width W1 of the gasket 10 is zero (W1=0), an insulation layer cannot be formed on the positive electrode 210, and if the width W1 of the gasket 10 is greater than 5mm (W1>5mm), the performance of the positive active material layer 213 is reduced, thereby causing the capacity to deteriorate. In addition, if the thickness t of the gasket 10 is more than 10 (m), too large a step is created on the positive active material layer 213, which is unsuitable for uniform pressurization of the solid electrolyte layer 300.

Compared to the negative electrode 400, the protruding portion W2 of the solid electrolyte layer 300 is zero before the pressurization process (W2 = 0), and during a roll press process, it protrudes by side stretching and is less than 1mm (0 ≤ W2 ≤ 1mm). Due to the protruding portion W2 of the solid electrolyte layer 300, physical contact between the negative electrode 400 and the positive electrode 210 may be precluded. The protruding portion W2 is derived from a pressurizing process and does not break or fall off easily.

In this way, while the sizes of the positive electrode 210 and the negative electrode 400 are the same, the protruded width W2 of the gasket 10 functionally makes an NP ratio of the negative electrode 400 and the positive electrode 200 greater than 1.0 (NP ratio>1). Accordingly, an electrical short circuit between the negative electrode 400 and the positive electrode 200 may be suppressed.

Due to the intrusion of the gasket 10, the positive active material layer 213 and the gasket 10 form a coplanar surface on the solid electrolyte layer 300 side. The all-solid-state positive active material layer 213 and the gasket 10 form a stepped structure.

Therefore, even when the gasket 10 is applied, the pressure between the solid electrolyte layer 300 and the positive active material layer 213, where the gasket 10 is positioned, and the pressure between the solid electrolyte layer 300 and the gasket 10, where the gasket 10 is not positioned, may achieve equilibrium.

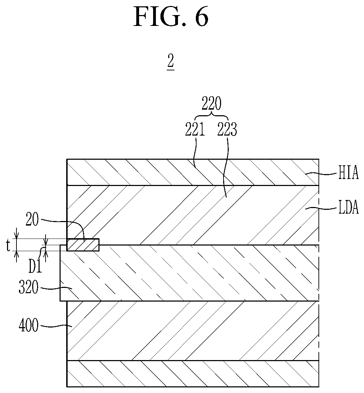

FIG. 6 is a cross-sectional view showing an all-solid-state rechargeable battery according to a second embodiment of the present invention. Referring to FIG. 6, in the all-solid-state rechargeable battery 2 of the second embodiment, the gasket 20 is positioned on the outside between the solid electrolyte layer 300 and the positive electrode 220 to allow the thickness change, density change, and roughness change of the positive electrode 220 and the solid electrolyte layer 320 in the pressurization process to increase the pressurization uniformity of the solid electrolyte layer 320.

The positive electrode 220 includes a positive electrode current collector 221 and a positive active material layer 223. The gasket 20 may penetrate into the positive active material layer 223 and the solid electrolyte layer 320. At this time, the penetration amount D1 of the gasket 20 into the solid electrolyte layer 320 may be within 20% of the thickness t of the gasket 20 (D1≤0.2t). The gasket 20 forms a stepped structure with the positive active material layer 223 and a reverse stepped structure with the solid electrolyte layer 320.

Therefore, even when the gasket 20 is applied, the pressure between the solid electrolyte layer 320 and the positive active material layer 223, where the gasket 20 is positioned, and the pressure between the solid electrolyte layer 320 and the gasket 20, which is not positioned by the gasket 20, may achieve equilibrium.

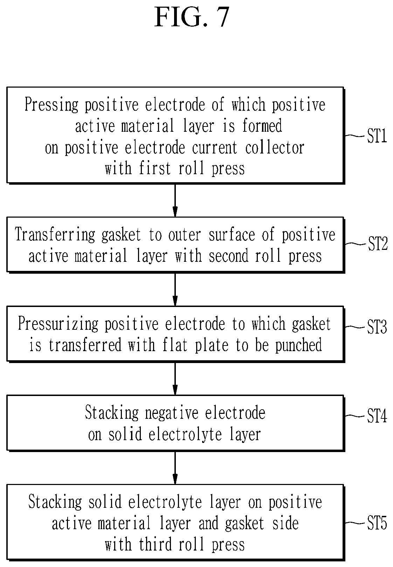

FIG. 7 is a flowchart showing a manufacturing method of an all-solid-state rechargeable battery according to an embodiment. For convenience, the all-solid-state rechargeable battery 1 of the first embodiment is taken as an example.

Referring to FIG. 7, the manufacturing method of the all-solid-state rechargeable battery according to an embodiment includes a first step (ST1), a second step (ST2), a third step (ST3), a fourth step (ST4), a fifth step (ST5). In the first step (ST1), the positive electrode 210 in which the positive active material layer 213 is formed on the positive electrode current collector 211 is pressed with a first roll press.

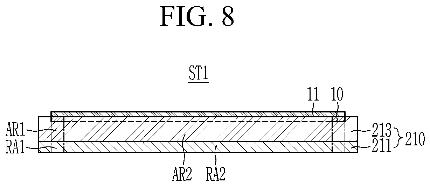

FIG. 8 is a cross-sectional view of a state in which a gasket is transferred to a positive electrode and a carrier film is not removed. Referring to FIG. 7 and FIG. 8, the gasket 10 is treated while adhered to the carrier film 11, and is supplied to the positive active material layer 213 together with a carrier film 11 and then transferred.

In the first step (ST1), the positive active material layer 213 is pressurized with 50% of the total pressurization of the entire process for the positive active material layer 213. At this time, the first adhesive force formed between the positive active material layer 213 and the gasket 10 increases more significantly than the second adhesive force formed between the gasket 10 and the carrier film 11.

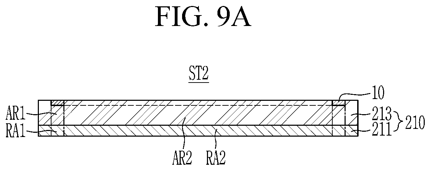

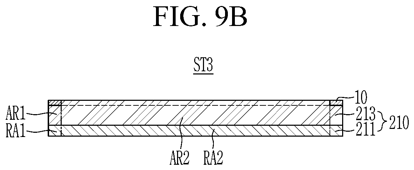

FIG. 9A is a cross-sectional view of a state in which a gasket is transferred to a positive electrode. FIG. 9B is a cross-sectional view of a state in which a positive electrode transferred at FIG. 9A is punched and a carrier film is removed. Referring to FIG. 7, and FIG. 9A, in the second step (ST2), the gasket 10 is transferred to the outer surface of the positive active material layer 213 by a second roll press.

In the second step (ST2), among the positive active material layers 213, a first area AR1 corresponding to the gasket 10 is pressurized with the high-density area HDA, and a second area AR2 set inside the first area AR1 is pressurized with the low-density area LDA, which is lower than the first area AR1.

Also, in the second step ST2, a first response area RA1 corresponding to the first area AR1 of the positive electrode current collector 211 is pressurized with the low-intensity area (a smooth surface) LIA, and a second response area RA2, which is set inside the first response area RA1, is pressurized with a high-intensity area (a rough surface) HIA higher than the first response area RA1.

Referring to FIG. 7 and FIG. 9B, in the third step (ST3), the positive electrode 210 on which the gasket 10 is transferred is punched out by pressing a plate. In the punched positive electrode 210, the positive active material layer 213 includes the first area AR1 and the second area AR2, and the positive electrode current collector 211 includes the first response area RA1 and the second response area RA2.

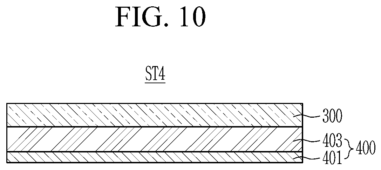

FIG. 10 is a cross-sectional view of a state in which a negative electrode is stacked on a solid electrolyte layer. Referring to FIG. 7 and FIG. 10, in the fifth step (ST5), the negative electrode 400 is stacked on the solid electrolyte layer 300. The stack of the solid electrolyte layer 300 and the negative electrode 400 is formed. At this time, the outer edges of the solid electrolyte layer 300 and the negative electrode 400 remain aligned.

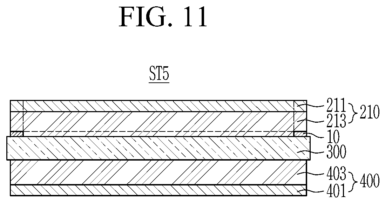

FIG. 11 is a cross-sectional view of a state in which a gasket-transferred positive electrode is punched out and stacked on a solid electrolyte layer. Referring to FIG. 7 and FIG. 11, in the fifth step (ST5), the solid electrolyte layer 300 is stacked on the positive active material layer 213 and the gasket 10 side and is pressed by a third roll press. At this time, the solid electrolyte layer 300 is stretched and protruded further than the negative electrode 400 by a protruded width W2 on one side.

That is, through the pressurization process, in the fifth step (ST5), the first end E1 of the positive electrode 210 and the gasket 10 are aligned with each other, and the second end E2 of the solid electrolyte layer 300 further protrudes outward from the first end E1 by the protruded width W.

In the fifth step (ST5), the gasket 10 penetrates the positive active material layer 213, and the positive active material layer 213 and the gasket 10 are formed on the same plane on the solid electrolyte layer 300 side (referring to FIG. 5 and FIG. 11).

Therefore, even when the gasket 10 is applied, the pressure between the solid electrolyte layer 300 where the gasket 10 is positioned and the positive active material layer 213, and the pressure between the solid electrolyte layer 300 where the gasket 10 is not positioned and the gasket 10 may be in equilibrium.

When applying the all-solid-state rechargeable battery 2 of the second embodiment, in the fifth step (ST5), the gasket 20 penetrates into the positive active material layer 223, and on the solid electrolyte layer 320 side, the gasket 20 protrudes further than the surface of the positive active material 223 and penetrates into the solid electrolyte layer 320 (see FIG. 6).

Therefore, even when the gasket 20 is applied, the pressure between the solid electrolyte layer 320 and the positive active material layer 223 where the gasket 20 is positioned and the positive active material layer 223, and the pressure between the solid electrolyte layer 320 where the gasket 20 is not positioned and the gasket 20 may achieve equilibrium.

Hereinafter, actual experimental examples and comparative examples prepared using the all-solid-state rechargeable battery according to the manufacturing method of the embodiment will be compared and described with reference to Table 1.

**[Table 1 ]**

| | Gasket | | | | | | Evaluation | | |
|---|---|---|---|---|---|---|---|---|---|
| | Applicability | Power | | Binder | Thickness (µm) | Width (W1, mm) | Pressurization uniformity | Initial capacity (mAh/g) | Short circuit position |
| | | Composition | Size (D50, µm) | PVDF-HFP (wt.%) | | | | | |
| First experimental example | Application | Al2O3 | 0.3 | 5 | 1 | 2 | ⊙ | 181 | >300 |
| Second experimental example | Application | SiO2 | 0.3 | 5 | 1 | 2 | ⊙ | 180 | >300 |
| Third experimental example | Application | ZrO2 | 0.3 | 5 | 1 | 2 | ⊙ | 182 | >300 |
| Fourth experimental example | Application | TiO2 | 0.3 | 5 | 1 | 2 | ⊙ | 179 | >300 |
| Fifth experimental example | Application | Al2O3 | 0.3 | 5 | 2 | 2 | ⊙ | 181 | >300 |
| Sixth experimental example | Application | Al2O3 | 0.3 | 5 | 0.5 | 2 | ⊙ | 170 | >300 |
| Seventh experimental example | Application | Al2O3 | 0.3 | 5 | 3 | 2 | ○ | 165 | <200 |
| Eighth experimental example | Application | Al2O3 | 0.3 | 5 | 2 | 1 | ⊙ | 190 | <200 |
| Ninth experimental example | Application | Al2O3 | 0.3 | 5 | 2 | 0.5 | ⊙ | 195 | <100 |
| First comparative example | No | - | - | - | - | - | ⊙ | 200 | >300 |
| Second comparative example | No | - | - | - | - | - | ⊙ | 80 | <1 |

| | | | | | | | | | |
|---|---|---|---|---|---|---|---|---|---|
| ⊙ : Excellent, ○ : Good | | | | | | | | | |

A pre-press of the negative active material layer 403 at the negative electrode 400 is 1.5 (ton.f/cm) in a line pressure, and room temperature (RT) is 25°C. The solid electrolyte layer 300 is directly coated on the negative active material layer 403 and dried, and the thickness thereof is 100 µm.

In the positive electrode 210, a specific capacity of the positive active material layer 213 is 200 (mAh/g), the positive active material is 85%, a loading level (L/L) is 20.56 (mg/cm²), a current density is 4.11 (mAh/cm²), the line pressure is 5.0 (ton.f/cm) during pre-pressurization, and a temperature is 120°C.

The negative electrode 400/solid electrolyte layer 300/positive electrode 210 are temporarily bonded.

Two rolls of a roll press have a diameter (ϕ) of 400x400 mm each, an effective length of 120 mm, a line pressure of 5.0 (ton·f/cm), and a temperature of 120°C. The elasticity layer 500 is acryl foam or polyurethane foam with a thickness of 300 µm and is applied for a charge/discharge evaluation. The initial capacity is 0.1C-0.05C charge and 0.1C discharge, and the short circuit occurs at 0.33C-0.1C charge and 0.33C discharge.

The first to ninth experimental examples are pressed with a roll press, and the first comparative example is an isotropic pressurization (500MPa, 98°C, 30min) such as warm isostatic pressurization (WIP) with a gasket. The second comparative example is pressed under the same conditions as the roll press. The second comparative example has a micro-short in the first charge, making it difficult to evaluate a normal charge and discharge.

In the first to ninth experimental examples, the sizes of the positive electrode 210 and the negative electrode 400 are the same, the NP ratio is set as 1.0, and the solid electrolyte layer 300, which is a separation layer between the negative electrode 210 and the positive electrode 400, may be uniformly pressed.

The first to ninth experimental examples apply a uniaxial roll press with a shear force, and the gasket 10 is applied to the edge of the positive electrode 210 to verify a normal charge and discharge and a long cycle-life. The first to ninth experimental examples suppress the same short circuit as the second comparative example.

The gasket 10 is composed of an oxide powder and a binder, and in one example, the powder size is 300nm, and the binder is 5wt% of PVDF-HFP which has low reactivity with sulfide-based electrolytes. The thickness t of the gasket 10 is 0.5 to 10 µm, and the width W1 is adjusted in the range of 0.5 to 2 mm.

The evaluation criteria for each condition are the solid electrolyte layer 300 pressure uniformity, the initial capacity at charge and discharge, and the time when a short circuit occurs during a cycle-life.

In the first to fourth experimental examples, the powder composition of the gasket 10 is changed, but equivalent characteristics are confirmed in terms of pressurization uniformity and when a short circuit occurs (i.e., insulating properties). In the fifth to seventh experimental examples the thickness t of the gasket 10 is varied where the pressurization uniformity deteriorates as the thickness t increases, and the initial capacity and the cycle-life also deteriorates compared to the baseline.

In the eighth and ninth experimental examples, the width W1 of the gasket 10 is reduced, and as the width W1 decreases, the initial capacity increases, but the cycle-life, on the contrary, deteriorates compared to the baseline. In other words, it is understood that as the width W1 of the gasket 10 becomes smaller, the amount of Li precipitation at the edge of the negative electrode 4100 increases, and the stress of Li to the solid electrolyte layer 300 increases, and thus the short-circuit time shortens.

In general, if the sizes of the positive and negative electrodes are not the same, it is impossible to uniformly pressurize the middle solid electrolyte layer by using a uniaxial pressing method. Additionally, if the sizes of the positive and negative electrodes are the same, there is a problem of short circuiting due to excessive Li precipitation and movement of Li ions at the edge of the negative electrode.

However, in the experimental examples of the present invention, the gasket 10 is applied between the positive electrode 210 and the solid electrolyte layer 300 even when the NP ratio is 1.0, thereby short circuiting does not occur even with the 1-axis roll press, and the solid electrolyte layer 300 may be uniformly pressurized.

What is described above is only one example for implementing a method of manufacturing an all-solid-state battery, a process plate, and the all-solid-state battery according to the present invention, and this invention is not limited to the above embodiments, and as claimed in the following claims, anyone of ordinary skill in the field of the present invention will have the technical spirit to which this invention to the extent that various modifications can be implemented.

### <Description of symbols>

| | | | |
|---|---|---|---|
| 1, 2: | all-solid-state rechargeable battery | 10, 20: | gasket |
| 210, 220: | positive electrode | 211, 221: | positive electrode current collector |
| 213, 223: | positive active mate rial layer | 300, 320: | solid electrolyte layer |
| 400: | negative electrode | 401: | negative electrode current collector |
| 403: | negative active material layer | 500: | elasticity layer |
| AR1: | first area | AR2: | second area |
| D1: | penetration amount | E1: | first end |
| E2: | second end | HAD: | high-density area |
| HIA: | high-intensity area | LDA: | low-density area |
| LIA: | low-intensity area | RA1: | first response area |
| RA2: | second response area | t: | thickness |
| W1: | width | W2: | protruded width |

## Claims

1. An all-solid-state rechargeable battery comprising:
a negative electrode;
a solid electrolyte layer stacked on the negative electrode;
a positive electrode provided with a positive active material layer on a positive electrode current collector and stacked on the solid electrolyte layer; and
an insulating gasket positioned on the outside between the positive active material layer and the solid electrolyte layer,
wherein the positive active material layer includes
a high-density area corresponding to the gasket and compressed by an intrusion of the gasket, and
a low-density area provided inside the high-density area.

2. The all-solid-state rechargeable battery as claimed in claim 1, wherein:
the positive electrode current collector includes
a low-intensity area corresponding to the high-density area, and
a high-intensity area inside the low-intensity area.

3. The all-solid-state rechargeable battery as claimed in claim 2, wherein:
the first end of the positive electrode and the gasket coincide with each other, and
the second end of the solid electrolyte layer protrudes further outward than the first end by a protruded width W.

4. The all-solid-state rechargeable battery as claimed in claim 2, wherein:
the positive active material layer and the gasket form the same plane on the solid electrolyte layer side.

5. The all-solid-state rechargeable battery as claimed in claim 4, wherein:
the positive active material layer and the gasket form a stepped structure.

6. The all-solid-state rechargeable battery as claimed in claim 1, wherein:
the amount of the penetration of the gasket is within 20% of the gasket thickness.

7. The all-solid-state rechargeable battery as claimed in claim 1, wherein:
the gasket penetrates the solid electrolyte layer.

8. The all-solid-state rechargeable battery as claimed in claim 7, wherein:
the gasket forms a stepped structure with the positive active material layer, and a reverse stepped structure with the solid electrolyte layer.

9. A manufacturing method of an all-solid-state rechargeable battery comprising:
pressing a positive electrode of which a positive active material layer is formed on a positive electrode current collector with a first roll press;
transferring a gasket to the outer surface of the positive active material layer with a second roll press;
pressurizing the positive electrode to which the gasket is transferred with a flat plate to be punched;
stacking a negative electrode on a solid electrolyte layer; and
stacking the solid electrolyte layer on the positive active material layer and the gasket side with a third roll press.

10. The manufacturing method of the all-solid-state rechargeable battery as claimed in claim 9, wherein:
the first roll press
pressurizes the positive active material layer with 50% of the total pressurization,
to increase a first adhesion of the positive active material layer and the gasket to be greater than a second adhesion of the gasket and a carrier film.

11. The manufacturing method of the all-solid-state rechargeable battery as claimed in claim 9, wherein:
the second roll press
pressurizes the first area corresponding to the gasket with high density among the positive active material layers, and
pressurizes a second area, which is set inside the first area, with a lower density than the first area.

12. The manufacturing method of the all-solid-state rechargeable battery as claimed in claim 11, wherein:
the second roll press
pressurizes a first response area corresponding to the first area of the positive electrode current collector with low intensity, and
forms a second response area, which is set inside the first response area with a higher intensity than the first response area.

13. The manufacturing method of the all-solid-state rechargeable battery as claimed in claim 12, wherein:
the fifth roll press
aligns the first end of the positive electrode and the gasket with each other, and
protrudes the second end of the solid electrolyte layer further outward than the first end by a protruded width W.

14. The manufacturing method of the all-solid-state rechargeable battery as claimed in claim 12, wherein:
the fifth roll press
forms the positive active material layer and the gasket on the same plane on the solid electrolyte layer side.

15. The manufacturing method of the all-solid-state rechargeable battery as claimed in claim 14, wherein:
the fifth roll press
further protrudes the gasket beyond the surface of the positive active material on the solid electrolyte layer side to penetrate the solid electrolyte layer.
